# EUROPEAN PATENT APPLICATION

(11) **EP 0 595 541 A1**
(43) Date of publication of application: **04.05.1994**
(21) Application number: 93308345.3
(22) Date of filing: 20.10.1993
(51) Int. Cl.: G10L 5/06, G10L 7/08, G10L 9/06

(54) **Speech recognition system**

(30) Priority: 30.10.1992 US 968724
(71) Applicant: AT&T Corp., New York, NY 10013-2412 (US)
(72) Inventor: Mikkilineni, Rajendra Prased, Gahanna, Ohio 43230 (US)
(74) Representative: Watts, Christopher Malcolm Kelway, Dr.

(57) **Abstract**

Apparatus and method for recognizing alphanumeric information within a string of spoken sounds. The apparatus has a data base structure (10) wherein is stored reference alphanumeric information recorded as phonemes strings (1002) of the phonemes (1001) comprising sounds of reference phrases, words, characters and numbers. In operation, the apparatus responds to the receipt of spoken sounds by comparing the received spoken sounds to the stored reference phrases, words, characters and numbers and assigning a total score (120) to each comparison representing the closeness of the spoken sounds with the reference phrases, words, characters and numbers. The apparatus selects the highest total score and compares the spoken sounds with each phoneme of the selected reference phrase, word, character or number. Scores assigned to each compared phoneme is summarized to determine the validity of the received spoken sounds as the selected reference phrase, word, character or number.

## Description

### Field of the Invention

The invention relates to a speech recognition system and in particular to a system for recognizing alphanumeric information in a string of spoken sounds.

### Background and Problem

Speech recognition systems are increasingly being used in applications wherein it is required to recognize and respond to spoken sounds. In a typical application, a department store uses a speech recognition system in telephone sales operations to inform calling customers of new merchandise and to accept customers spoken orders. Another application may be used by a stock brokerage firm to respond to a calling customer voice request for a stock quotation by verbally quoting current information relating to the calling customer's account.

Speech recognition systems usually have a data base storing voice prompt messages that are verbally transmitted over telephone lines to calling customers to prompt the customer for additional information. Speech recognition systems also have templates stored in the data base representing alphanumeric information such as phrases, words, characters and numbers used in various applications. In operation, a calling customer is connected with a speech recognition system which responds to the calling customer by transmitting a verbal prompt message over a telephone line to a telephone set used by the calling customer. The calling customer, upon hearing the voice prompt message, responds thereto by spoken sounds that are transmitted over the telephone line to the speech recognition apparatus. The calling customer spoken sounds received by the speech recognition apparatus is compared with templates to identify the received verbal information as specific alphanumeric information such as phrases, words, characters and numbers.

A problem arises in that speech recognition systems, for example speech recognition systems used as keyword controlled systems, are oftentimes required to recognize a specific spoken phrase, word, character or numeral that is received as a string of spoken sounds wherein the received sounds may be similar to but different from ones of stored templates. Accordingly, a need exists for speech recognition systems arranged to recognize specific phrases, words, characters or numbers that are present in strings of received sounds corresponding with alphanumeric information.

### Solution

The foregoing problem is solved by apparatus and method for recognizing alphanumeric information within a string of spoken sounds. The apparatus has a data base structure wherein is stored reference alphanumeric information recorded as strings of phonemes wherein each string comprising sounds of a reference phrase, word, character or number. In operation, the apparatus responds to the receipt of a string of spoken sounds by comparing the received spoken sounds to the stored reference phrases, words, characters and numbers and assigning a total score to each comparison representing the closeness of the spoken sounds with the reference phrases, words, characters and numbers. The apparatus selects the highest total score and compares the spoken sounds with each phoneme of the recorded reference phrase, word, character or number assigned the highest total score. Sub-scores are assigned to each compared phoneme and applied to a neural network and the summarized output thereof determines the validity of received spoken sounds as a reference phrase, word, character or number.

### Brief Description of the Drawing

FIG. 1 illustrates a speech recognition system embodying the principles of the instant invention;
FIG. 2 illustrates a speech recognition algorithm for controlling the operation of the speech recognition system set forth in FIG. 1;
FIG. 3 illustrates a software configured neural network of the speech recognition system set forth in FIG. 1; and
FIGS. 4 and 5 illustrate flow charts of the operation of the speech recognition system set forth in FIG. 1 in accordance with the speech recognition algorithm of FIG. 2 operating in accordance with the principles of the invention.

### Detailed Description

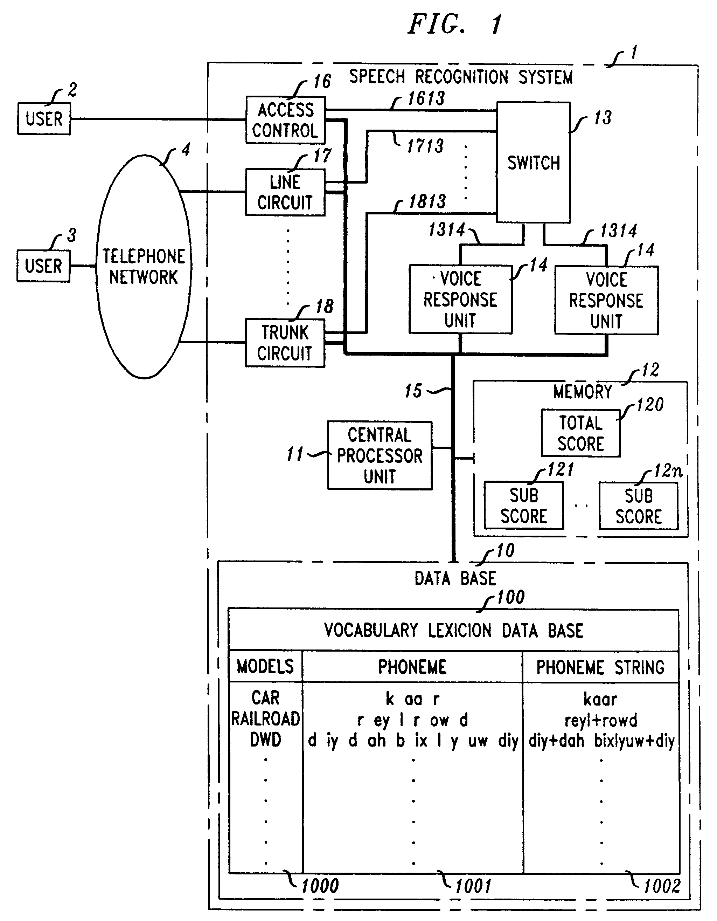

In an exemplary embodiment of the invention, speech recognition system 1, FIG. 1, is intended for use in a wide variety of applications to enable customers, hereinafter referred to as users, to have access to data stored in computer systems and to physical facilities and services provided to users by system owners. In one application, a computer system may serve a number of users and store data files restricted for use by various users each identified by a unique user password. In another application, a department store may have an order department wherein a telephone party may call the department store and verbally place an order by speaking the identify of an ordered product into a telephone handset that is connected by a telephone line to speech recognition system 1 maintained by the department store. In yet another application, a provider of financial services may provide electronic access to user account files wherein access to an account file is governed by a unique user password.

Speech recognition system 1 is intended for use in recognizing specific alphanumeric information occurring in a string of user spoken sounds. The structure of speech recognition system 1 has line interface apparatus comprising a plurality of access circuits 16, line circuits 17 and trunk circuits 18, each of which are well-known and need not be detailed for an understanding of the invention, and which interconnect speech recognition system 1 with users such as users 2, 3. Access circuit 16 may be connected with any one of a number of well-known voice activated devices that enables user 2 to directly receive from and enter spoken sounds into speech recognition system 1. Line circuits 17 and trunk circuits 18 may be coupled with corresponding line circuit and trunk circuits of telephone switching systems of telephone network 4 and enable a user 3 of telephone network 4 to place a telephone call and to receive and enter spoken alphanumeric sounds from and into speech recognition system 1.

Each speech recognition system access, line and trunk circuit 16, 17, 18, respectively, is also coupled to switch 13 and controlled by a data bus 15 extending from central processor unit 11. A number of voice response units 14 are each connected with switch 13 and controlled via central processor unit 11 and data bus 15 to generate audio prompt messages used to instruct users 2, 3 interconnected with access, line and trunk circuits 16, 17, 18 in the use of speech recognition system 1 and to request information from calling users 2, 3. In addition, each voice response unit 14 is controlled by central processor unit 11 to transmit spoken sounds received from users 2, 3 in response to the generated audio prompt messages over data bus 15 to central processor unit 11. Received spoken sounds are recorded under control of central processor unit 11 in memory 12. Switch 11, interconnected with access, line and trunk circuits 16, 17, 18, and with voice response units 14, is controlled by central processor unit 11, via data bus 15, to selectively connect ones of voice response units 14 with ones of access, line and trunk circuits 16, 17, 18 connected with users 2, 3.

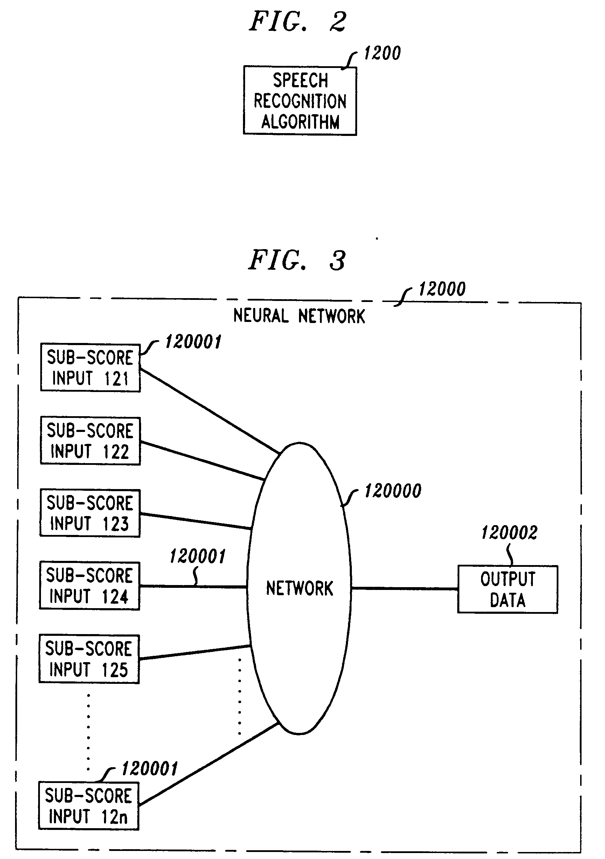

Speech recognition system 1 comprises a general purpose computer, such as a 386, 486 or an AT&T 3B2-400 and 3B2-310 simplex or duplex computer. Such computers need not be described in detail for an understanding of the invention and in general have a central processor unit 11 and a memory unit 12 each interconnected by address, data and control leads to data bus 15. Data bus 15, interconnected with access, line, trunk circuits 16, 17, 18, switch 13 and voice response units 14, enables central processor unit 11 to control each unit and to exchange information therewith in the operation of speech recognition system 1. Central processor unit 11 is programmed to control speech recognition system 1 in accordance with speech recognition algorithm 1200, FIG. 2, to recognize specific alphanumeric information occurring in a string of user spoken sounds.

System data base 10, FIG. 1, has a vocabulary lexicon database file 100 wherein is prerecorded a plurality of reference alphanumeric models 1000 each corresponding to a predefined reference alphanumeric phrase, word, character or number. Each alphanumeric model 1000 is represented as a string of phonemes 1002 made up of the phonemes set forth in phoneme file 1001. For example, a user unique password such as the representative password "DWD" has associated with it the phoneme string "diy+dahbixlyuw+diy" comprising the set of individual phonemes "d", "iy", "d", "ah", "b", "ix", "l", "y", "uw", "d" and "iy". Data base 10 may be any one of well-known disk, tape, solid state or other type of storage devices arranged to store digital information and is connected to data bus 15 and controlled by central processor unit 10 to store spoken alphanumeric information received from users 2, 3. In addition to prerecorded alphanumeric models 1000 and received user information, central processor unit 11 is also programmed to store a number of messages in data base 10 that are used to prompt users 2, 3 in the use of speech recognition system 1 and to enter information into the system. Typically, such prompt messages may be "Please enter order information at this time." and "What is your password?".

In operation, the apparatus of speech recognition system 1 responds to an access request generated by a user, such as user 2, 3, by transmitting a prompt message to the user and by recognizing sounds spoken by the user in response to the transmitted prompt message. The system initiates a sequence for recognizing alphanumeric information in a received string of user spoken sounds by comparing the spoken sounds received from users 2, 3 with each stored reference alphanumeric phrase, word, character and number models of stored database model file 1000 represented by the associated phoneme strings recorded and stored in phoneme string file 1002. Central processor unit 11, operating in accordance with the program instructions of speech recognition algorithm 1200, FIG. 2, computes a total score 120, FIG. 1, and assigns the computed total score 120 to each comparison representing the closeness of the spoken sounds with the phoneme string 1002 comprising the compared reference alphanumeric phrase, word, character or number model 1000.

Upon completion of assigning total scores 120 to each comparison with alphanumeric models 1000, central processor unit 11 selects the reference alphanumeric model 1000 assigned the highest total score 120 of all compared reference alphanumeric models 1000. After selection of the reference alphanumeric model with the highest total score 120, the received user spoken sounds are compared with each individual phoneme 1001 of the string of phonemes 1002 comprising the selected reference alphanumeric model. A sub-score 121 through 12n is computed and assigned to each compared phoneme indicating a closeness of the spoken sounds with each phoneme set forth in the corresponding phoneme file 1001. Central processor unit 11 applies each computed and assigned sub-score 121 through 12n to inputs of a software defined neural network 12000, FIG. 3, configured to have a plurality of inputs 120001 each for receiving one of the computed phoneme sub-scores. Network 120000 is designed to summarize input phoneme sub-scores 121 through 12n and derive output data 120002 as a classification of the summarized sub-scores wherein the network output data 120002 represents a closeness of the spoken sounds with the recorded and stored phonemes of the selected reference alphanumeric model. The neural network derived output data 120002 is matched by central processor unit 11 with a predetermined threshold, and the received user spoken sounds are identified as the selected reference alphanumeric phrase, word, character or number when the difference between neural network output data 120002 and the predetermined threshold is within a defined range of the predetermined threshold. Neural networks, such as neural network 12000, are well-known both in design and operation and need not be described in detail for an understanding of the invention. Sufficient to say that these types of networks summarize input data such as sub-scores 121 through 12n and derive output data 120002 that is representative of input data of sub-score inputs 121 through 12n.

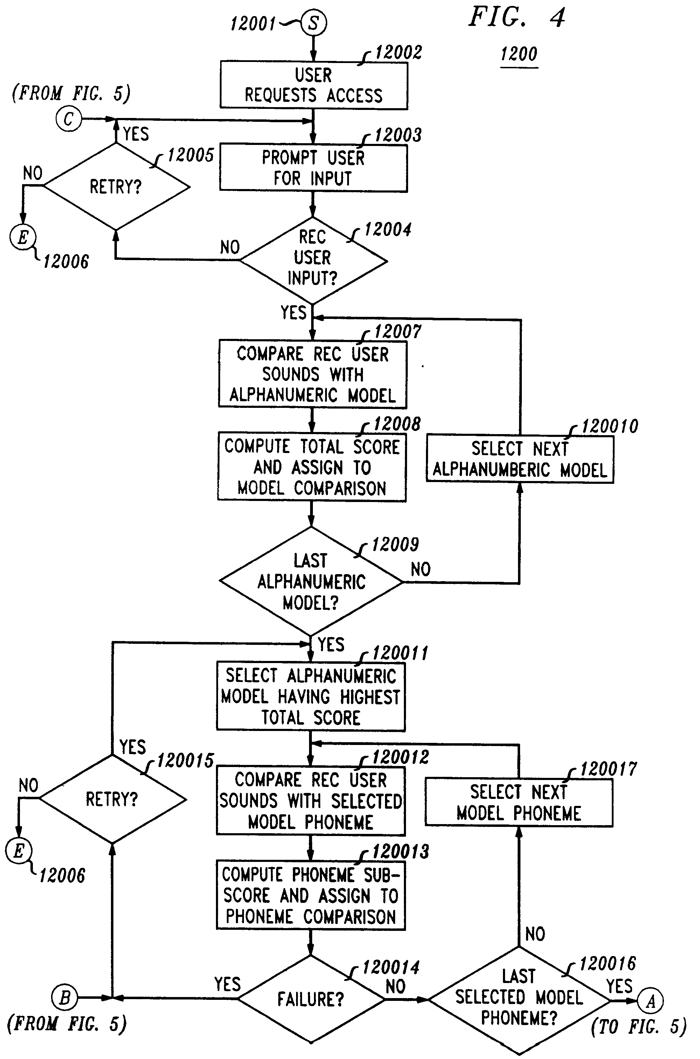

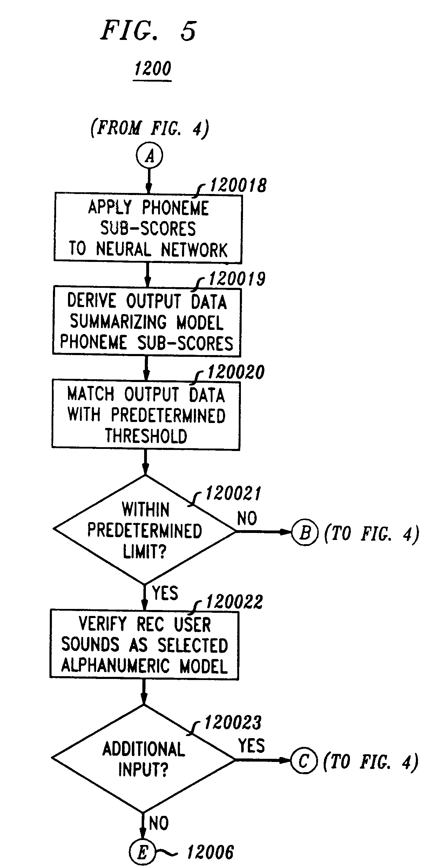

The operation of speech recognition system 1, as controlled by operation of speech recognition algorithm 1200, FIG. 2, is started, steps 12001, 1002, FIGS. 4, 5, by a user 2, 3 requesting access to the system. Access circuit 16, FIG. 1, connected with user 2, or line and trunk circuits 17, 18 connected to user 3 by operation of telephone network 4, responds to a user request by notifying central processor unit 11 of the request via data bus 15. Central processor unit 11 reacts to the user request by controlling switch 13 to connect the appropriate access, line and trunk circuit 16, 17, 18 to a voice response unit 14. Upon connection, central processor unit 11, step 12003, FIG. 4, controls voice response unit 14 to transmit a voice prompt message to the user requesting an input from the user. If there is a failure to receive information from the user, central processor unit 11, step 12004, initiates a retry, step 12005, by re-transmitting the prompt message to the user, step 12003. When there is a continued failure to receive information, steps 12004, 12005, central processor unit 11 ends the recognition sequence, step 12006, and disconnects the user from the system.

When the user responds to the transmitted prompt message, step 12004, voice response unit 14, FIG. 1, receives and recognizes sounds spoken by the user. Assuming that the user responds to a prompt message for a password by speaking the unique password "DWD", speech recognition system 1 compares the received user spoken sounds which may include the password "DWD" with each of the prerecorded alphanumeric reference phrase, word, character and number models 1000 stored in date base 10, step 12007, FIG. 4. In the comparison process, step 12008, central processor unit 11, operating in accordance with speech recognition algorithm 1200, computes a total score 120 representing the closeness of the received user spoken sounds with the phoneme strings comprising the compared reference phrase, word, character and number models 1000 and assigns the computed total score to each comparison representing a closeness of the received user sounds with the phoneme string of the compared alphanumeric model. In the example of the received user spoken sounds that include the assumed password "DWD", FIG. 1, central processor unit 11 computes total scores 120 representing the closeness of the received user spoken sounds with the phoneme strings of each alphanumeric model 1000 such as "kaar", "reyl+rowd" and "diy+dahbixlyuw+diy" associated with alphanumeric models "CAR", "RAILROAD" and "DWD", respectively, and assigns each computed total score 120 with the appropriate model 1000. After each comparison, speech recognition algorithm 1200, FIG. 2, determines if the user receiver spoken sounds have been compared with the last alphanumeric model 1000, step 12009, FIG. 4. If not, central processor unit 11, FIG. 1, selects the next alphanumeric model 1000, step 120010, FIG. 4, and repeats steps 12007 through 12009.

After the last alphanumeric model 1000 has been compared and a total score 120 assigned thereto, central processor unit 11 selects the alphanumeric model 1000 assigned the highest total score 120, step 120011. Assuming that the received user spoken sounds included the unique password "DWD", FIG. 1, the phoneme string "diy+dahbixlyuw+diy" comparison is assumed to having been assigned the highest total score 120 and alphanumeric model word "DWD" is selected. and number model 1000.

In speaking a particular alphanumeric phrase, word, character or number, for example the unique password "DWD", the string of sounds received from the user of speech recognition system 1 will often include miscellaneous utterances such as sighs, background sounds, noise and other comments. Thus, the received string of user spoken sounds include miscellaneous sounds in addition to the sounds of the desired alphanumeric information. However, speech recognition system 1 recognizes ones of the alphanumeric models 1000 prerecorded in vocabulary lexicon database 100 and which are embedded in a string of user received spoken sound.

Speech recognition algorithm 1200, step 120012, FIG. 4, controls central processor unit 11 to compare the received user sounds with each phoneme of the phoneme string corresponding to the selected alphanumeric model 1000 assigned the highest total score 120, step 120011. Thus, for the example of the selected password "DWD", the phonemes 1001, FIG. 1, "d", "iy", "d", "ah", "b", "ix", "l", "y", "uw", "d" and "iy" comprising the phoneme string 1002, "diy+dahbixlyuw+diy" of the selected alphanumeric word "DWD" are each individually compared with the received user spoken sounds, step 120013, FIG. 4. In the phoneme comparison process, central processor unit 11, FIG. 1, computes a phoneme sub-score 121 through 12n for each phoneme 1001 of the selected alphanumeric model and assigns the computed
sub-score to each compared phoneme indicating a closeness of the received user spoken sounds with the compared phoneme, step 120013, FIG. 4. Should a failure, step 120014, occur in the comparison process, central processor unit 11, FIG. 1, operating in accordance with speech recognition algorithm 1200, FIG. 2, retries the phoneme comparison, step 120015, FIG. 4, for a predetermined number of times by repeating steps 120011 through 120014. If the failure continues, step 120015, the recognition sequence is ended, step 12006 and the user discontinued from the system. In the absence of a system failure, step 120014, central processor unit 11 continues the phoneme comparison process by selecting the next model phoneme, step 120017, and repeating steps 120012 through 120015 until all of the model phonemes have been compared and each assigned a phoneme sub-score 121 through 12n.

After a sub-score has been computed and assigned to the last phoneme 1001, FIG. 1, central processor unit 11, step 120018, FIG. 5, applies the computed phoneme sub-scores 121 through 12n to inputs 120001 of the software defined neural network 12000, FIG. 3. Network 120000 summarizes the input phoneme sub-scores and derives output data 120002 as a classification of the input phoneme sub-scores representing a closeness of the spoken sounds with the phonemes of the selected reference alphanumeric phrase, word, character or number model 1000, step 120019, FIG. 5. Derived output data 120002 is matched with a predetermined threshold, step 120020, and central processor unit 11 verifies the received user spoken sounds as the selected reference alphanumeric phrase, word, character or number model 1000 when the difference in the match of derived output data 120002 with the predetermined threshold is within a defined range or limit of the threshold, steps 120021, 120022. If the match difference is outside the limit, steps 120021, 120015, FIGS. 5, 4, central processor unit 11 retries the comparison for a predetermined number of retries by repeating steps 120011 through 120021. When the number of retry attempts is exceeded, step 120015, the speech recognition process is ended, step 12006, and the user is disconnected from the system. After verification, step 120022, FIG. 5, central processor unit 11 determines if there is to be additional user input and if required, prompts the user for additional information, steps 120023 and 12003, FIG. 4.
When it is determined that there is to be no additional input from the user, central processor unit 11 ends the speech recognition sequence and disconnects the user from the system, step 12006, FIG. 5.

### Summary

It is obvious from the foregoing that the facility, economy and efficiency of speech recognition systems are substantially enhanced by a speech recognition system designed to recognize a predefined alphanumeric phrases, words, characters and numbers positioned within a string of spoken sounds. While the instant invention has been disclosed as an independent speech recognition system coupled with a user and by lines and trunks with a telephone network it is to be understood that such an embodiment is intended to be illustrative of the principles of the invention and that numerous other arrangements such as having the speech recognition system included as an integral component of a telephone switching system or other type of speech system requiring recognition of specific alphanumeric information in a string of spoken sounds may be devised by those skilled in the art without departing from the scope of the invention. It is also to be understood that the recognition sequence occurs in real-time as the user of the instant speech recognition utters the spoken sounds.

## Claims

1. Apparatus for recognizing information in a string of user spoken sounds comprising
means (10, 11 12) for comparing received spoken sounds with stored reference models each represented by a string of phonemes and assigning a total score (120) to each comparison representing a closeness of the spoken sounds with each reference model, and
means (10, 11, 12) for selecting one of the reference models assigned the highest total score (120) and comparing the spoken sounds with each phoneme of the selected reference model and assigning a sub-score (121, 12n) to each compared phoneme of the selected model and applying each phoneme comparison sub-score to a network (12000) that summarizes the applied scores and determines a validity of the received spoken sounds as the selected model in accordance with the summarized sub-scores.

2. The user spoken information recognition apparatus set forth in claim 1 wherein said comparing and assigning means comprises
a data base for storing models comprising predefined reference phrases, words, characters and numbers as phonemes and a string of the phonemes identifying sounds of the reference phrase, word, character and number.

3. The user spoken information recognition apparatus set forth in claim 1 wherein said comparing and assigning means comprises
means responsive to receipt of the user spoken sounds for comparing the received spoken sounds with each stored reference phrase, word, character and number and assigning a total score to each comparison representing the closeness of the spoken sounds with the phoneme strings comprising the compared reference phrase, word, character and number.

4. The user spoken information recognition apparatus set forth in claim 3 wherein said selecting, comparing and assigning means comprises
means responsive to a selection of said reference phrase, word, character and number for comparing the spoken sounds with each phoneme of the string of phonemes comprising the selected reference phrase, word, character and number and assigning a sub-score to each compared phoneme indicating a closeness of the spoken sounds with each phoneme.

5. The user spoken information recognition apparatus set forth in claim 1 wherein said selecting, comparing and assigning means comprises
a neural network having a plurality of inputs each for receiving one of said phoneme sub-scores and for summarizing said input sub-scores and deriving output data as a classification of said summarized sub-scores wherein said output data represents a closeness of the spoken sounds with the selected reference phrase, word, character and number.

6. A method of operating speech recognition apparatus in real-time for recognizing information in a string of user spoken sounds comprising the steps of
comparing received user spoken sounds with stored reference models represented by strings of phonemes and assigning a total score to each comparison representing a closeness of the spoken sounds with the reference model, and
selecting one of the reference models assigned the highest total score and comparing the spoken sounds with each phoneme of the selected reference model by assigning a sub-score to each compared phoneme of the selected reference model and summarizing the phoneme sub-scores and determining a validity of the received spoken sounds as the selected reference model in accordance with the summarized scores.

7. The method of operating speech recognition apparatus set forth in claim 6 wherein said comparing and assigning step comprises the step of
comparing the received spoken sounds with each stored reference phrase, word, character and number and assigning a total score to each comparison representing the closeness of the spoken sounds with the phoneme string comprising the compared reference phrase, word, character and number.

8. The method of operating speech recognition apparatus set forth in claim 6 wherein said selecting, comparing and summarizing step comprises the step of
comparing the spoken sounds with each phoneme of the string of phonemes comprising the selected reference phrase, word, character and number and assigning a sub-score to each compared phoneme indicating a closeness of the spoken sounds with the compared phoneme.

9. The method of operating speech recognition apparatus set forth in claim 6 wherein said selecting, comparing and summarizing step comprises the step of
applying the phoneme sub-scores to a neural network and deriving output data as a classification of said phoneme sub-scores representing a closeness of the spoken sounds with the selected reference phrase, word, character and number.

10. The method of operating speech recognition apparatus set forth in claim 9 wherein said selecting, comparing and summarizing step comprises the step of
matching the neural network derived output data with a predetermined threshold and identifying the user spoken sounds as the selected reference phrase, word, character and number user password when the match difference is within a defined range of the predetermined threshold.
